# EUROPÄISCHE PATENTSCHRIFT

(11) **EP 4 317 028 B1**
(45) Veröffentlichungstag und Bekanntmachung des Hinweises auf die Patenterteilung: **02.10.2024**
(21) Anmeldenummer: 22188920.7
(22) Anmeldetag: 05.08.2022
(51) Int. Cl.: B65G 1/137, B65G 1/04

(54) **BLOCKLAGERANORDNUNG UND VERFAHREN ZUM BETREIBEN EINER BLOCKLAGERANORDNUNG**
BLOCK STORAGE ARRANGEMENT AND METHOD FOR OPERATING SAME
SYSTÈME D'ENTREPOSAGE EN BLOCS ET PROCÉDÉ PERMETTANT DE FAIRE FONCTIONNER UN SYSTÈME D'ENTREPOSAGE EN BLOCS

(43) Veröffentlichungstag der Anmeldung: 07.02.2024
(73) Patentinhaber: Jungheinrich Aktiengesellschaft, 22047 Hamburg (DE)
(72) Erfinder: Becker, Michael, 63512 Hainburg (DE); Morawietz, Timm, 66636 Tholey-Überroth (DE); Cavelius, Jörg, 61118 Bad Vilbel (DE)
(74) Vertreter: Keil & Schaafhausen Patentanwälte PartGmbB

(56) Entgegenhaltungen:
- CN-A- 111 348 357
- KR-B1- 102 321 831
- US-A1- 2021 197 900
- US-B1- 10 858 202
- US-B1- 9 280 153

## Beschreibung

Die vorliegende Erfindung betrifft eine Blocklageranordnung nach dem Oberbegriff des Anspruchs 1.

Weiterhin betrifft die Erfindung ein Verfahren zum Betreiben einer Blocklageranordnung nach dem Oberbegriff des Anspruchs 8.

In einer Blocklageranordnung, die auch als "Stapellageranordnung" bezeichnet wird, können Behälter in einer aufeinandergestapelten Form gelagert werden. Für jeden dieser Behälterstapel ist ein Behälteraufnahmeraum vorgesehen. Da die Behälter in einem Behälteraufnahmeraum aufeinander stehen, wird in Schwerkraftrichtung der zur Verfügung stehende Raum vollständig ausgenutzt. Die Behälteraufnahmeräume können auch relativ dicht benachbart angeordnet werden, so dass man auch quer zur Schwerkraftrichtung den zur Verfügung stehenden Raum sehr gut ausnutzen kann.

Die Behälter dienen dazu, Gegenstände aufzunehmen. Die Gegenstände können beispielsweise in einer Arbeitsstation in einen Behälter eingelagert werden. Danach wird der Behälter in einen Behälteraufnahmeraum verbracht. Wenn der Gegenstand aus dem Behälter wieder entnommen werden soll, muss der Behälter aus dem Behälteraufnahmeraum entnommen und in die Arbeitsstation verbracht werden. Dort ist ein Zugriff auf den Behälter von außen möglich.

Die aus den Behältern gebildeten Stapel in den Behälteraufnahmeräumen können eine beträchtliche Höhe aufweisen. Je höher ein Stapel von Behältern ist, desto größer ist das Risiko, dass sich der Stapel neigt und im Extremfall kippt.

US 2021/0197900 A1, das die im Oberbegriff von Anspruch 1 genannten Merkmale aufweist, beschreibt ein Transportfahrzeug, das in einem Lagersystem eingesetzt werden kann. Das Transportfahrzeug weist mehrere Gewichtssensoren auf, mit denen der Ladeschwerpunkt der Nutzlast, die auf dem Transportfahrzeug angeordnet ist, bestimmt werden kann.

US 10 858 202 B1 beschreibt ein Handhabungssystem im Zusammenhang mit einer Lageranordnung. Hier werden Behälter oder Pakete mithilfe eines Fahrzeugs auf einem Fußboden bewegt, der mit Luftaustrittsöffnungen versehen ist, so das ein Luftkissen erzeugt wird. Das Lagersystem kann mehrere Sensoren aufweisen, unter anderem einen Gewichtssensor, mit dem man den Massenschwerpunkt des Fahrzeugs ermitteln kann.

CN 111 348 357 A beschreibt in Verfahren zum Betreiben einer Logistikanordnung und eine mechanische Transportausrüstung. Die mechanische Transportausrüstung kann Gewichtsdaten ermitteln, um ein geeignetes Lagerabteil auszuwählen.

US 9 280 153 B1 beschreibt ein Lagersystem, bei dem Regale auf einem Fahrzeug transportiert werden können. Es sind optische Mittel zur Bestimmung des Ladungsschwerpunkts vorgesehen. Die in dem Regal befindlichen Gegenstände sind jeweils seitlich nebeneinander angeordnet.

KR 102 321 831 B1 zeigt eine Transport- und Lageranordnung für Eisenplatten. Es sind mehrere Sensoren vorgesehen, mit denen die Lage einer Eisenplatte ermittelt werden kann, unter anderem auch optische Sensoren.

Der Erfindung liegt die Aufgabe zugrunde, Risiken beim Betrieb einer Blocklageranordnung kleinzuhalten.

Diese Aufgabe wird bei einer Blocklageranordnung mit den Merkmalen des Anspruchs 1 gelöst.

Mit der Behälterladungsschwerpunkt-Ermittlungseinrichtung ist man in der Lage, in gewissen Grenzen eine Information darüber zu gewinnen, wie eine Ladung in einem Behälter verteilt ist. Die Ladung besteht dabei, wie oben ausgeführt, aus einem oder mehreren Gegenständen, die in dem Behälter gelagert werden sollen. Wenn der Behälterladungsschwerpunkt sehr weit außerhalb der Mitte angeordnet ist, kann man dann beispielsweise mit Hilfe der Behälterladungsschwerpunkt-Ermittlungseinrichtung ein Warnsignal erzeugen, so dass eine Bedienungsperson, die den Gegenstand oder die Gegenstände in den Behälter eingelagert hat, die Möglichkeit hat, die Beladung des Behälters zu überprüfen.

Vorzugsweise ermittelt die Behälterladungsschwerpunkt-Ermittlungseinrichtung eine Beladungsexzentrizität. Damit steht ein Maß zur Verfügung, das man als Kriterium verwenden kann, ob der Schwerpunkt der Beladung noch innerhalb zulässiger Grenzen angeordnet ist.

Vorzugsweise ermittelt die Behälterladungsschwerpunkt-Ermittlungseinrichtung eine Masse des Behälters. Damit steht ein zusätzliches Kriterium zur Verfügung, um das Risiko einer Neigung eines Behälterstapels in einem Behälteraufnahmeraum kleinzuhalten. Ein Behälter mit einer großen Masse kann dann beispielsweise in einem Stapel relativ weit unten angeordnet werden, so dass hier ein außermittig gelagerter Schwerpunkt weniger kritisch ist, als wenn der Behälter mit der gleichen Masse weiter oben in dem Stapel angeordnet wäre.

Die Behälterladungsschwerpunkt-Ermittlungseinrichtung ist mit einer Steuereinrichtung verbunden, die einen Behälteraufnahmeraum in Abhängigkeit von einem Ausgangssignal der Behälterladungsschwerpunkt-Ermittlungseinrichtung auswählt. Eine derartige Ausgestaltung ist insbesondere dann von Vorteil, wenn der Behälter von unten in einen Behälteraufnahmeraum eingebracht und nach unten aus dem Behälteraufnahmeraum entnommen wird. In diesem Fall befindet sich in Schwerkraftrichtung unterhalb der Behälteraufnahmeräume ein Beschickungsraum, in dem das Beschickungsfahrzeug verfahren werden kann. Um einen Behälter oder einen Stapel von Behältern in einem Behälteraufnahmeraum festzuhalten, ist zwischen dem jeweiligen Behälteraufnahmeraum und dem Beschickungsraum eine Halteeinrichtung angeordnet. Diese Halteeinrichtung weist beispielsweise mehrere Halteklinken auf oder andere Teile, auf denen der Behälter oder der Behälterstapel ruht. Wenn man nun in der Lage ist, den Behälterladungsschwerpunkt zu ermitteln, kann man verhindern, dass in einem Behälteraufnahmeraum mehrere Behälter übereinandergestapelt werden, bei denen der Behälterladungsschwerpunkt in die gleiche Richtung vom Mittelpunkt des Behälters entfernt ist. In diesem Fall würde sich eine unzulässig hohe Belastung auf einen Teil der Halteeinrichtung oder auf einen Teil des untersten Behälters eines Stapels ergeben, während ein anderer Teil der Halteeinrichtung wesentlich geringer belastet ist. Mit der Behälterladungsschwerpunkt-Ermittlungseinrichtung kann man daher das Risiko einer Überlastung der Halteeinrichtung vermeiden.

In einer bevorzugten Ausgestaltung ist vorgesehen, dass die Behälterladungsschwerpunkt-Ermittlungseinrichtung mindestens drei mit Abstand zueinander angeordnete Wiegeeinrichtungen aufweist. Die Wiegeeinrichtungen können beispielsweise als Wägezellen ausgebildet sein. Wenn man mindestens drei derartige Wiegeeinrichtungen verwendet, kann man auf einfache Weise an drei unterschiedlichen Positionen Gewichtskräfte ermitteln, die von dem Behälter auf die Wiegeeinrichtungen ausgeübt werden. Aus diesen Gewichtskräften lässt sich dann eine Aussage über den Behälterladungsschwerpunkt gewinnen.

Vorzugsweise weist die Behälterladungsschwerpunkt-Ermittlungseinrichtung vier Wiegeeinrichtungen auf, die Ecken des Behälters zugeordnet sind. Mit vier Wiegeeinrichtungen, die genau definierten Positionen zugeordnet sind, ist es relativ einfach, den Schwerpunkt der Behälterladung zu erfassen.

Vorzugsweise ist die Behälterladungsschwerpunkt-Ermittlungseinrichtung in einer Arbeits - oder Übergabestation oder auf dem Beschickungsfahrzeug angeordnet. Damit ist die Behälterladungsschwerpunkt-Ermittlungseinrichtung dort angeordnet, wo eine Änderung der Beladung des Behälters erfolgt. Man kann dann die Behälterladungsschwerpunkt-Ermittlung immer dann durchführen, wenn ein Gegenstand in einen Behälter eingelagert oder aus einem Behälter entnommen wird. Auch bei der erstmaligen Einlagerung eines Behälters in die Blocklageranordnung ist es dann möglich, die Masse und den Schwerpunkt des Behälters zu ermitteln. Bei einem leeren Behälter geht man davon aus, dass der Schwerpunkt mit dem Mittelpunkt in der horizontalen Erstreckung des Behälters liegt. Mit der Behälterladungsschwerpunkt-Ermittlungseinrichtung ist es zusätzlich möglich, zu überprüfen, ob der Behälter in vorgegebenen Toleranzen gewünschten Vorgaben genügt.

Vorzugsweise weist die Behälterladungsschwerpunkt-Ermittlungseinrichtung eine optische Aufnahmeeinrichtung auf. Die optische Aufnahmeeinrichtung kann beispielsweise erkennen, wie Gegenstände in dem Behälter verteilt sind. Wenn die optische Aufnahmeeinrichtung feststellt, dass alle Gegenstände in einer Ecke des Behälters konzentriert sind, kann sie beispielsweise ein Warnsignal ausgeben. Die optische Aufnahmeeinrichtung kann alternativ oder zusätzlich zu den Wiegeeinrichtungen vorgesehen sein.

Die Aufgabe wird bei einem Verfahren mit den Merkmalen des Anspruchs 8 gelöst.

Wenn man den Behälterladungsschwerpunkt ermittelt und feststellt, dass dieser Behälterladungsschwerpunkt außerhalb eines zusätzlichen Bereichs liegt, dann kann man ein Alarmsignal erzeugen, um eine Bedienungsperson darauf aufmerksam zu machen, dass die Beladung des Behälters überprüft und ggfs. auch geändert werden muss.

Man wählt einen Behälteraufnahmeraum in Abhängigkeit vom ermittelten Behälterladungsschwerpunkt aus. Dies ist insbesondere dann von Vorteil, wenn die Blocklageranordnung in Schwerkraftrichtung von unten beschickt wird, d.h. wenn unterhalb der Behälteraufnahmeräume ein Beschickungsraum angeordnet ist, in dem das Beschickungsfahrzeug verfahren wird. Die Behälter werden dann von unten durch eine Halteeinrichtung in den jeweiligen Behälteraufnahmeraum eingesetzt. Die Halteeinrichtung hält dann den Behälter und ggfs. einen Stapel von Behältern fest. Wenn der Behälterladungsschwerpunkt außerhalb eines erlaubten Bereichs angeordnet ist, besteht das Risiko, dass ein Teil der Halteeinrichtung stärker belastet wird als andere Teile der Halteeinrichtung. Wenn mehrere Behälter in dem Stapel die gleiche oder eine ähnliche Position des Behälterladungsschwerpunkts haben, kann dies dazu führen, dass dieser Teil der Halteeinrichtung und /oder der unterste Behälter eines Stapels überlastet wird. Man wählt dementsprechend einen Behälteraufnahmeraum so aus, dass eine Überlastung eines Teils der Halteeinrichtung oder des untersten Behälters vermieden wird und die Gewichtskraft der Behälter auf die Halteeinrichtung des Behälters auf alle Teile der Halteeinrichtung möglichst gleichmäßig verteilt werden. Eine exakte Gleichverteilung wird sich zwar nicht erzielen lassen. Man kann aber dafür sorgen, dass die auf einen Teil der Halteeinrichtung wirkende Kraft nicht zu einer Überlastung dieses Teils führt. Sollte sich eine derartige Überlastung abzeichnen, weil der einzulagernde Behälter einen Behälterladungsschwerpunkt aufweist, der zusammen mit den Behälterladungsschwerpunkten bereits eingelagerter Behälter zu einer Überlastung führen würde, wird ein anderer Behälteraufnahmeraum ausgewählt.

Vorzugsweise ermittelt man den Behälterladungsschwerpunkt vor jedem Einlagern des Behälters in einen Behälteraufnahmeraum. Dabei geht man davon aus, dass sich in den meisten Fällen der Ladungszustand des Behälters vor dem Einlagern des Behälters in den Behälteraufnahmeraum verändert hat. Wenn man jedes Mal den Behälterladungsschwerpunkt ermittelt, kann man sicherstellen, dass das Risiko, dass sich der Stapel von Behältern neigt, kleingehalten wird. Unter Umständen kann man beim Umstapeln von Behältern von einem Behälteraufnahmeraum zu einem anderen Behälteraufnahmeraum auf das Ermitteln des Behälterladungsschwerpunkts verzichten, vor allem, wenn man bereits die Information über den Behälterladungsschwerpunkt gespeichert hat. In manchen Fällen wird man jedoch auch in diesem Fall eine Ermittlung des Behälterladungsschwerpunkts vornehmen, um sicherzustellen, dass sich die Gesamtheit der Behälterladungsschwerpunkte in einem Behälterstapel in einem Behälteraufnahmeraum innerhalb zulässiger Grenzen bewegt. In diesem Fall kann es von Vorteil sein, wenn die Behälterladungsschwerpunkt-Ermittlungseinrichtung auf dem Beschickungsfahrzeug angeordnet ist.

Vorzugsweise ermittelt man den Behälterladungsschwerpunkt durch Ermitteln einer Gewichtskraft an mehreren unterschiedlichen Positionen des Behälters. Wenn man die Gewichtskraft an mehreren unterschiedlichen Positionen des Behälters in der horizontalen Richtung ermittelt, kann man auf einfache Weise den Behälterladungsschwerpunkt bestimmen.

Vorzugsweise ermittelt man eine Gesamtmasse des Behälters. Wenn man ohnehin die Gewichtskraft an mehreren unterschiedlichen Positionen des Behälters ermittelt, kann man durch Addition dieser Gewichtskräfte auch die Gesamtmasse des Behälters ermitteln. Man kann damit vermeiden, dass die Halteeinrichtung am unteren Ende eines Behälteraufnahmeraums überlastet wird.

Vorzugsweise ermittelt man den Behälterladungsschwerpunkt optisch. In diesem Fall kann man beispielsweise eine Kamera oder dergleichen verwenden, um zu überprüfen, wie die Ladung, in der Regel mehrere Gegenstände, in dem Behälter verteilt sind. Wenn sich hier eine unzulässige Konzentration außerhalb der Mitte des Behälters (in der horizontalen Ebene) ergibt, kann man ein Warnsignal erzeugen. Die optische Ermittlung kann alternativ oder zusätzlich zu der Ermittlung der Gewichtskräfte erfolgen.

Vorzugsweise ermittelt man eine Exzentrizität des Behälterladungsschwerpunkts und wählt einen Behälteraufnahmeraum in Abhängigkeit von der ermittelten Exzentrizität aus. Mit der Exzentrizität steht ein einfaches Maß zur Verfügung, das man verwenden kann, um das Risiko der Neigung des Behälterstapels oder das Risiko der Überlastung eines Teils einer Halteeinrichtung kleinzuhalten.

Die Erfindung wird im Folgenden anhand von bevorzugten Ausführungsformen in Verbindung mit der Zeichnung beschrieben. Hierin zeigen:
- Fig. 1: eine schematische Darstellung einer Stapellageranordnung,
- Fig. 2: eine schematische Draufsicht auf die Stapellageranordnung und
- Fig. 3: eine alternative Ausgestaltung einer Arbeitsstation.

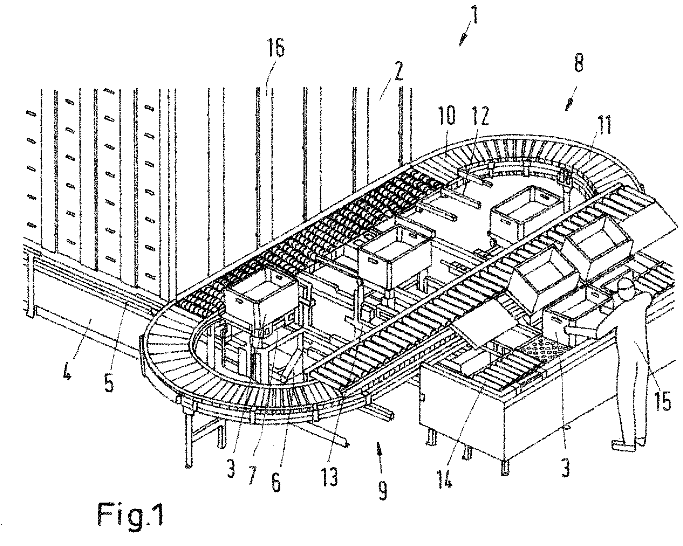

Fig. 1 zeigt in schematischer Form eine Stapellageranordnung 1 mit mehreren Behälteraufnahmeräumen 2, in denen Behälter 3 gestapelt gelagert werden können. Die Stapellageranordnung 1 weist mehrere derartige Behälteraufnahmeräume 2 auf, die in Form einer Matrix mit Reihen und Spalten angeordnet sein können. Beispielsweise kann man fünf Spalten und sechzehn Reihen vorsehen, so dass man insgesamt achtzig Stapel von Behältern 3 unterbringen kann.

Die Behälter 3 werden von unten in den jeweiligen Behälteraufnahmeraum 2 eingebracht und auch von unten aus dem jeweiligen Behälteraufnahmeraum 2 entnommen. Dementsprechend ist in Schwerkraftrichtung unterhalb der Behälteraufnahmeräume 2 ein Beschickungsraum 4 vorgesehen. Zwischen dem Beschickungsraum 4 und den Behälteraufnahmeräumen 2 ist eine Halteanordnung 5 vorgesehen, von der hier nur ein Rahmen dargestellt ist. Die Halteanordnung 5 weist für jeden Behälteraufnahmeraum 2 eine Halteeinrichtung auf, die beispielsweise mehrere Halteklinken aufweisen kann, die den jeweils untersten Behälter eines Stapels halten und eine Bewegung des untersten Behälters und damit eine Bewegung des Stapels in dem Beschickungsraum 4 verhindern.

Wenn ein Behälter 3 in einem Behälteraufnahmeraum 2 eingelagert werden soll, wird dieser Behälter 3 mit einem Beschickungsfahrzeug 6 in den Beschickungsraum 4 hineingefahren. Wenn das Beschickungsfahrzeug 6 eine Position unterhalb eines Behälteraufnahmeraums 2 erreicht hat, in den der einzulagernde Behälter 3 eingelagert werden soll, dann wird eine Behälteraufnahme 7 des Beschickungsfahrzeugs 6 angehoben, und zwar so lange, bis der einzulagernde Behälter 3 mit dem untersten Behälter eines Stapels in Kontakt kommt. Die Behälteraufnahme 7 wird weiter angehoben und hebt dann nicht nur den einzulagernden Behälter 3 an, sondern auch den Stapel der übrigen Behälter. Dieses Anheben erfolgt so lange, bis der einzulagernde Behälter 3 an der Halteeinrichtung vorbeibewegt worden ist. Danach wird der gesamte Stapel einschließlich dem einzulagernden Behälter abgesenkt, bis die Halteeinrichtung in Eingriff mit dem neu eingelagerten Behälter kommt und diesen festhält.

Beim Entnehmen eines Behälters wird das Beschickungsfahrzeug 6 wieder in eine Position unterhalb des Behälterstapels verfahren. Die Behälteraufnahme 7 wird angehoben, bis sie in Kontakt mit dem zu entnehmenden Behälter kommt. Die Behälteraufnahme 7 wird weiter angehoben und hebt dann den gesamten Stapel an, und zwar so lange, bis der zu entnehmende Behälter von der Halteeinrichtung freikommt. Die Halteeinrichtung wird dann gelöst, beispielsweise indem Halteklinken der Halteeinrichtung nach oben und aus dem Bewegungsweg des Behälters verschwenkt werden, mit anderen Worten in eine Freigabeposition. Die Halteeinrichtung wird dann so lange offengehalten, bis durch Absenken der Behälteraufnahme der zu entnehmende Behälter in den Beschickungsraum 4 bewegt worden ist. Die Halteeinrichtung wird dann wieder aktiviert, so dass die Halteeinrichtung den unteren Behälter des verbleibenden Stapels wieder festhalten kann. Das Beschickungsfahrzeug 6, von denen drei in Fig. 1 dargestellt sind, fördert dann die Behälter 3 in abgesenkter Position aus dem Beschickungsraum 4 in eine Arbeitsstation 8.

Außerhalb der Behälteraufnahmeräume ist eine Arbeitsstation 8 angeordnet. Die Arbeitsstation 8 weist einen Übergabebereich 9 auf, in dem mindestens eine Transporteinrichtung 10 angeordnet ist, die in einem Umlauf geführt ist und eine Vielzahl von angetriebenen Rollen 11 aufweist. Das Beschickungsfahrzeug 6 kann dann den jeweiligen Behälter 3 an die Transporteinrichtung 10 übergeben oder einen Behälter 3 von der Transporteinrichtung 10 übernehmen, wofür Übergabefinger 12, 13 vorgesehen sind. Es ist möglich, den jeweiligen Behälter 3 auf der Transporteinrichtung 10 über den gesamten Umlauf zu bewegen. Damit ist es möglich, den Behälter 3 zu einer Handhabungsstation 14 zu transportieren, die ein Bestandteil der Arbeitsstation 8 ist, und in der eine Bedienungsperson 15 Zugriff auf den Behälter 3 hat, beispielsweise um dort Waren oder Gegenstände zu entnehmen oder derartige Waren oder Gegenstände in den Behälter 3 einzubringen. Die Arbeitsstation 8 kann auch verwendet werden, um einen Behälter 3 erstmalig in die Blocklageranordnung 1 einzulagern.

Die Arbeitsstation 8 kann auch auf andere Weise aufgebaut sein. Wenn Behälter an einer anderen Position be- und entladen werden, kann die Arbeitsstation 8 auch durch eine Übergabestation ersetzt werden, in der Behälter von einer Fordertechnik an die Blocklageranordnung übergeben werden. Wenn im Folgenden von einer Arbeitsstation 8 die Rede ist, ist damit auch eine Übergabestation gemeint.

Wenn man einen oder mehrere Gegenstände oder Produkte in den Behälter 3 einlagert, besteht das Risiko, dass sie ungleichmäßig in dem Behälter 3 angeordnet werden, so dass der Ladungsschwerpunkt des Behälters, der im Folgenden als "Behälterladungsschwerpunkt" bezeichnet wird, nicht mit dem Massenschwerpunkt des Behälters 3 übereinstimmt und außermittig angeordnet ist. Dies ist im Allgemeinen noch nicht kritisch, wenn man nur einen einzelnen Behälter 3 betrachtet. Wenn jedoch mehrere Behälter in Schwerkraftrichtung übereinandergestapelt sind und in allen Behältern der Behälterladungsschwerpunkt in die gleiche Richtung von der horizontalen Mitte des Behälters 3 abweicht, besteht das Risiko, dass sich der Stapel der Behälter 3 neigt und mit unzulässig hohen seitlichen Kräften auf Ständer 16 wirkt, die an den Ecken der Behälterstapelräume 2 angeordnet sind und die Behälterstapelräume, ggfs. mit zwischen den Ständern 16 befindlichen Querträgern, begrenzen. Zum anderen besteht das Risiko, dass die Halteeinrichtung 5 eines Behälterstapelraums 2 ungleichmäßig belastet wird. Wenn die Halteeinrichtung 5 eines Behälterstapelraums 2 beispielsweise vier Halteklinken aufweist, die im Bereich der vier Ecken des Behälterstapelraums 2 angeordnet sind und die Behälterladungsschwerpunkte aller Behälter in einer Ecke angeordnet sind, dann wirkt der größte Teil der vom Behälterstapel auf die Halteeinrichtung 5 ausgeübten Gewichtskraft auf die Halteklinke in dieser Ecke. Dies kann u.U. dazu führen, dass die Halteklinke überlastet wird und letztendlich ihre Funktion aufgibt oder sie beschädigt wird. Es besteht in diesem Fall auch das Risiko, dass der untere Behälter eines Stapels an einem Rand oder einer Ecke überlastet und beschädigt wird.

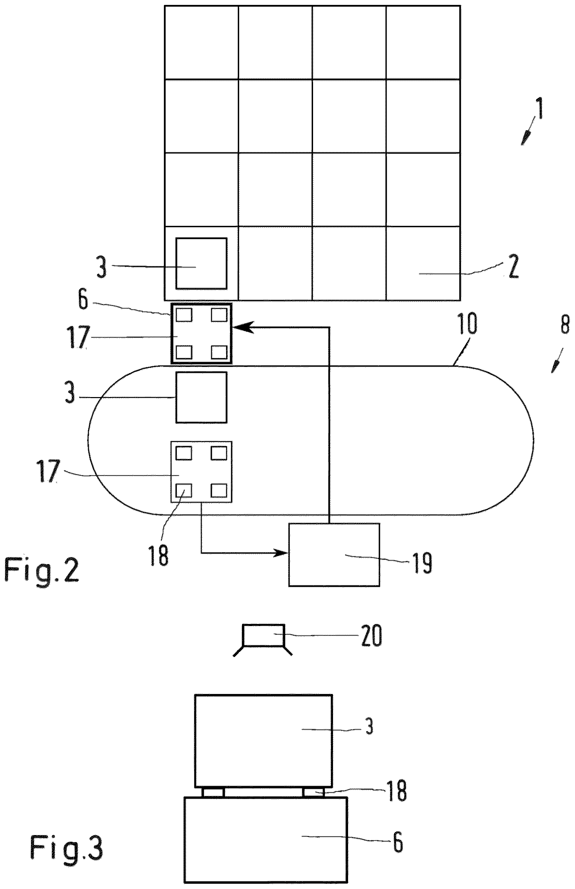

Um das Risiko einer Beschädigung oder Fehlfunktion der Blocklageranordnung 1 kleinzuhalten, ist, wie dies schematisch in den Fig. 2 und 3 dargestellt ist, eine Behälterladungsschwerpunkt-Ermittlungseinrichtung 17 vorgesehen, die in einer Beschickungsrichtung von der Arbeitsstation 8 zu den Behälteraufnahmeräumen 2 vor den Behälteraufnahmeräumen 2 angeordnet ist. Die Behälterladungsschwerpunkt-Ermittlungseinrichtung 17 kann also einen Behälterladungsschwerpunkt erkennen oder erfassen, bevor der Behälter 3 in den Behälteraufnahmeraum 2 eingelagert wird.

Die Behälterladungsschwerpunkt-Ermittlungseinrichtung 17 kann dabei, wie in Fig. 2 dargestellt, in der Arbeitsstation 8 angeordnet sein, beispielsweise im Bereich der Transporteinrichtung 10. Sie kann aber auch auf dem Beschickungsfahrzeug 6 angeordnet sein oder an jeder anderen Stelle, die ein Behälter 3 vor dem Einlagern in einem Behälteraufnahmeraum 2 passieren muss.

Im vorliegenden Fall weist die Behälterladungsschwerpunkt-Ermittlungseinrichtung 17 mehrere Wiegeeinrichtungen in Form von Wägezellen 18 auf. Im vorliegenden Fall sind vier Wägezellen 18 vorgesehen, die den vier Ecken eines Behälters 3 zugeordnet sind. Jede der Wägezellen 18 ermittelt einen Teil der vom Behälter 3 ausgeübten Gewichtskraft, so dass die Summe dieser Gewichtskraft auch eine Aussage über die Masse des Behälters erlaubt. Die Behälterladungsschwerpunkt-Ermittlungseinrichtung 17 ermittelt also vorzugsweise auch eine Masse des Behälters 3. Die Behälterladungsschwerpunkt-Ermittlungseinrichtung 17 ist mit einer Steuereinrichtung 19 verbunden, die aus den Signalen der Wägezellen 18 die Lage des Behälterladungsschwerpunkts ermittelt. Dabei kann die Steuereinrichtung 19 auch die Entfernung vom Schwerpunkt des Behälters 3 und die Richtung ermitteln, in der der Behälterladungsschwerpunkt von dem horizontalen Mittelpunkt des Behälters 3 entfernt ist. Der Schwerpunkt des Behälters 3 liegt üblicherweise im Mittelpunkt in horizontaler Richtung. Man kann die Behälterladungsschwerpunkt-Ermittlungseinrichtung 17 auch verwenden, um beim erstmaligen Einlagern eines Behälters 3 in die Blocklageranordnung 1 zu überprüfen, ob der Schwerpunkt des Behälters 3 in zulässigen Grenzen um den Mittelpunkt des Behälters 3 in horizontaler Richtung angeordnet ist.

Die Steuereinrichtung 19 kann aus der Entfernung, der Größe und aus der Richtung des Behälterladungsschwerpunkts vom Schwerpunkt oder Mittelpunkt des Behälters 3 eine Exzentrizität des Behälterladungsschwerpunkts ermitteln. Wenn die Exzentrizität einen vorbestimmten Grenzwert überschreitet, kann die Steuereinrichtung 19 ein Alarmsignal erzeugen, so dass die Bedienungsperson 15 die Ladung des Behälters 3 überprüfen kann.

Vorzugsweise wird die Steuereinrichtung 19 aber auch zu einer weiteren Aufgabe verwendet. Die Steuereinrichtung 19 speichert die Exzentrizitäten aller Behälter 3 in einem Behälteraufnahmeraum 2 und kann dann ermitteln, ob die Exzentrizität eines neu einzulagernden Behälters 3 noch zulässig ist oder nicht. Wenn sich bereits viele Behälter 3 in einem Behälteraufnahmeraum 2 befinden, deren Exzentrizitäten alle in die gleiche Richtung gehen, dann wird die Steuereinrichtung 19 den neu einzulagernden Behälter nicht mehr in diesen Behälteraufnahmeraum 2 einlagern können, sondern die Steuereinrichtung 19 gibt dem Beschickungsfahrzeug 6 den Befehl, einen anderen Behälteraufnahmeraum 2 anzufahren und den Behälter 3 dort einzulagern, wobei der neu ausgewählte Behälteraufnahmeraum 2 einen Behälterstapel mit einer zulässigen Gesamtexzentrizität aufweist, die durch die Exzentrizität des neu einzulagernden Behälters 3 nicht in unzulässiger Weise verändert wird.

Man geht also wie folgt vor:
Wenn ein Behälter 3 in der Arbeitsstation beladen oder entladen wird, d.h. wenn ein Produkt oder ein Gegenstand in einem Behälter 3 eingelagert oder aus einem Behälter 3 entnommen wird, wird der Behälter 3 über die Behälterladungsschwerpunkt-Ermittlungseinrichtung 17 geführt und dort wird mit Hilfe der Steuereinrichtung 19 die Lage und die Größe des Behälterladungsschwerpunkts ermittelt, mit anderen Worten die Exzentrizität. Weiterhin wird die Gesamtmasse des Behälters 3 ermittelt.

Die Halteeinrichtung am in Schwerkraftrichtung unteren Ende eines Behälteraufnahmeraums 2 ist für eine maximale Last ausgelegt, beispielsweise 750 kg. Hierbei gibt es auch eine maximale Verschiebung des Lastschwerpunkts des Stapels von beispielsweise 75 mm bei einer Abmessung der Behälter 3 in Draufsicht von 450 x 650 mm.

Der Behälter 3 wird also über die Behälterladungsschwerpunkt-Ermittlungseinrichtung 17 geführt und dort wird mit Hilfe der Wägezellen 18 der Schwerpunkt und die Masse des Behälters 3 bestimmt. Eine mögliche Exzentrizität pro Behälter 3 kann in Abhängigkeit seines Gewichts an der Arbeitsstation 8 zugelassen werden. Je kleiner die Zuladung des Behälters 3 ist, also die Masse der eingelagerten Gegenstände oder Produkte, desto größer ist die zugelassene Exzentrizität.

Aufgrund der ermittelten Masse und der ermittelten Exzentrizität wird nun mit Hilfe der Steuereinrichtung 19 ein Behälteraufnahmeraum 2 ermittelt, in den der Behälter 3 verbracht werden kann, ohne dass sich die Summe der Exzentrizitäten in Relation zum Stapelgewicht außerhalb eines gewissen zulässigen Bereichs befindet. Je größer das Gesamtstapelgewicht, desto kleiner ist die lastspezifische Exzentrizität.

Ein einzelner Behälter ist bei maximaler Beladung zugelassen für einen exzentrischen Schwerpunkt von etwa 150 mm. Sollte man mit Hilfe der Behälterladungsschwerpunkt-Ermittlungseinrichtung 17 feststellen, dass bei einem Behälter 3 dessen Schwerpunkt diesen Wert überschreitet, dann erhält die Bedienungsperson 15 eine Fehlermeldung, dass die Beladung des Behälters 3 geändert werden muss.

Fig. 3 zeigt eine abgewandelte Ausgestaltung. Hier ist zusätzlich zu den Wägezellen 18 eine optische Aufnahmeeinrichtung 20 vorgesehen, die an einem in Schwerkraftrichtung oben offenen Behälter hineinsehen kann und optisch ermittelt, wie die Ladung des Behälters 3 angeordnet ist. Die optische Aufnahmeeinrichtung 20 kann zusätzlich oder alternativ zu der Wiegeeinrichtung vorgesehen sein.

Die Verbindung zwischen der Steuereinrichtung 19 und dem Beschickungsfahrzeug 6 kann leitungslos oder mit Hilfe einer Signalleitung erfolgen.

In vielen Fällen wird man den Behälterladungsschwerpunkt des Behälters 3 vor jedem Einlagern des Behälters 3 in einen Behälteraufnahmeraum 2 ermitteln mit Ausnahme von so genannten "Umstapelvorgängen", bei denen ein Behälter 3 aus einem Behälteraufnahmeraum 2 entnommen und in einen anderen Behälteraufnahmeraum 2 eingelagert wird. Dies ist möglich, weil die Steuereinrichtung 19 bereits über eine Information über die Exzentrizität des umzulagernden oder umzustapelnden Behälters 3 verfügt. Die Steuereinrichtung 19 kann dann dafür sorgen, dass auch bei einem Umstapelvorgang keine unzulässig hohe Exzentrizität des Beladungsschwerpunkts des Gesamtstapels in einem Behälteraufnahmeraum 2 entsteht. Man kann aber auch vorsehen, dass auch bei jedem Umstapelvorgang eine Behälterladungsschwerpunktermittlung erfolgt.

## Patentansprüche

1. Blocklageranordnung (1) mit mehreren Behälteraufnahmeräumen (2), mindestens einem Behälter (3), und mindestens einem Beschickungsfahrzeug (6), das in einer Beschickungsrichtung zu den Behälteraufnahmeräumen (2) verfahrbar ist und eine Behälteraufnahme (7) für den mindestens einen Behälter (3) aufweist, wobei die Behälteraufnahmeräume (2) zur Aufnahme von Behälterstapeln ausgebildet sind, wobei in Beschickungsrichtung vor den Behälteraufnahmeräumen (2) eine Behälterladungsschwerpunkt-Ermittlungseinrichtung (17) angeordnet ist, **dadurch gekennzeichnet, dass** die Behälterladungsschwerpunkt-Ermittlungseinrichtung (17) mit einer Steuereinrichtung (19) verbunden ist, die einen Behälteraufnahmeraum (2) in Abhängigkeit von einem Ausgangssignal der Behälterladungsschwerpunkt-Ermittlungseinrichtung (17) auswählt.

2. Blocklageranordnung nach Anspruch 1, **dadurch gekennzeichnet, dass** die Behälterladungsschwerpunkt-Ermittlungseinrichtung (17) eine Beladungsexzentrizität ermittelt.

3. Blocklageranordnung nach Anspruch 1 oder 2, **dadurch gekennzeichnet, dass** die Behälterladungsschwerpunkt-Ermittlungseinrichtung (17) eine Masse des Behälters (3) ermittelt.

4. Blocklageranordnung nach einem der Ansprüche 1 bis 3, **dadurch gekennzeichnet, dass** die Behälterladungsschwerpunkt-Ermittlungseinrichtung (17) mindestens drei mit Abstand zueinander angeordnete Wiegeeinrichtungen (18) aufweist.

5. Blocklageranordnung nach Anspruch 4, **dadurch gekennzeichnet, dass** die Behälterladungsschwerpunkt-Ermittlungseinrichtung (17) vier Wiegeeinrichtungen (18) aufweist, die Ecken des Behälters (3) zugeordnet sind.

6. Blocklageranordnung nach einem der Ansprüche 1 bis 5, **dadurch gekennzeichnet, dass** die Behälterladungsschwerpunkt-Ermittlungseinrichtung (17) in einer Arbeits - oder Übergabestation (8) oder auf dem Beschickungsfahrzeug (6) angeordnet ist.

7. Blocklageranordnung nach einem der Ansprüche 1 bis 6, **dadurch gekennzeichnet, dass** die Behälterladungsschwerpunkt-Ermittlungseinrichtung (17) eine optische Aufnahmeeinrichtung (20) aufweist.

8. Verfahren zum Betreiben einer Blocklageranordnung (1) mit mehreren Behälteraufnahmeräumen (2), und mindestens einem Beschickungsfahrzeug (6), das in einer Beschickungsrichtung zu den Behälteraufnahmeräumen (2) verfahren wird und mit dem man mindestens einen Behälter (3) in einen Behälteraufnahmeraum (2) transportiert, wobei die Behälteraufnahmeräume (2) zur Aufnahme von Behälterstapeln ausgebildet sind, wobei man vor dem Einlagern des Behälters (3) in einen Behälteraufnahmeraum (2) einen Behälterladungsschwerpunkt des Behälters (3) ermittelt, **dadurch gekennzeichnet, dass** man einen Behälteraufnahmeraum (2) in Abhängigkeit vom ermittelten Behälterladungsschwerpunkt auswählt.

9. Verfahren nach Anspruch 8, **dadurch gekennzeichnet, dass** man den Behälterladungsschwerpunkt vor jedem Einlagern des Behälters (3) in einen Behälteraufnahmeraum (2) ermittelt.

10. Verfahren nach Anspruch 8 oder 9, **dadurch gekennzeichnet, dass** man den Behälterladungsschwerpunkt durch Ermitteln einer Gewichtskraft an mehreren unterschiedlichen Positionen des Behälters (3) ermittelt.

11. Verfahren nach Anspruch 10, **dadurch gekennzeichnet, dass** man eine Gesamtmasse des Behälters (3) ermittelt.

12. Verfahren nach einem der Ansprüche 8 bis 11, **dadurch gekennzeichnet, dass** man den Behälterladungsschwerpunkt optisch ermittelt.

13. Verfahren nach einem der Ansprüche 8 bis 12, **dadurch gekennzeichnet, dass** man eine Exzentrizität des Behälterladungsschwerpunkt ermittelt und einen Behälteraufnahmeraum (2) in Abhängigkeit von der ermittelten Exzentrizität auswählt.

## Claims

1. Block storage arrangement (1) having a plurality of container receiving spaces (2), at least one container (3), and at least one charging vehicle (6), which can be moved in a charging direction to the container receiving spaces (2) and has a container receptacle (7) for the at least one container (3), the container receiving spaces (2) being designed to receive stacks of containers, wherein in the charging direction a container loading center determining device (17) is arranged in front of the container receiving spaces (2), **characterized in that** the container load center determination device (17) is connected to a control device (19) which selects a container receiving space (2) as a function of an output signal from the container load center determination device (17).

2. Block storage arrangement according to claim 1, **characterized in that** the container load center of gravity determination device (17) determines a load eccentricity.

3. Block storage arrangement according to claim 1 or 2, **characterized in that** the container load center of gravity determination device (17) determines a mass of the container (3).

4. Block storage arrangement according to one of claims 1 to 3, **characterized in that** the container load center determination device (17) has at least three weighing devices (18) arranged at a distance from one another.

5. Block storage arrangement according to claim 4, **characterized in that** the container load center of gravity determining device (17) has four weighing devices (18) which are assigned to corners of the container (3).

6. Block storage arrangement according to one of claims 1 to 5, **characterized in that** the container load center of gravity determination device (17) is arranged in a work or transfer station (8) or on the charging vehicle (6).

7. Block storage arrangement according to one of claims 1 to 6, **characterized in that** the container load center of gravity determination device (17) has an optical pick-up device (20).

8. Method for operating a block storage arrangement (1) having a plurality of container receiving spaces (2), and at least one loading vehicle (6) which is moved in a loading direction to the container receiving spaces (2) and with which at least one container (3) is transported into a container receiving space (2), the container receiving spaces (2) being designed to receive stacks of containers, **characterized in that** a container loading center of gravity of the container (3) is determined before the container (3) is stored in a container receiving space (2) and a container receiving space (2) is selected as a function of the determined container loading center of gravity.

9. Method according to claim 8, **characterized in that** the center of gravity of the container load is determined before each storage of the container (3) in a container receiving space (2).

10. Method according to claim 8 or 9, **characterized in that** the center of gravity of the container load is determined by determining a weight force at several different positions of the container (3).

11. Method according to claim 10, **characterized in that** a total mass of the container (3) is determined.

12. Method according to one of claims 8 to 11, **characterized in that** the center of gravity of the container load is determined optically.

13. Method according to one of claims 8 to 12, **characterized in that** an eccentricity of the center of gravity of the container load is determined and a container receiving space (2) is selected as a function of the determined eccentricity.

## Revendications

1. Système d'entreposage en blocs (1) avec plusieurs espaces de logement pour conteneur (2), au moins un conteneur (3) et au moins un véhicule de chargement (6), qui peut être déplacé dans une direction de chargement vers les espaces de logement pour conteneur (2) et comporte un logement de conteneur (7) pour au moins un conteneur (3), sachant que les espaces de logement pour conteneur (2) sont constitués pour recevoir des piles de conteneurs, sachant que dans la direction de chargement, un dispositif de détermination du centre de gravité de charge de conteneur (17) est disposé devant les espaces de logement pour conteneur (2) **caractérisé en ce que** le dispositif de détermination du centre de gravité de charge de conteneur (17) est relié à un système de commande (19), qui sélectionne un espace de logement pour conteneur (2) en fonction d'un signal de sortie du dispositif de détermination du centre de gravité de charge de conteneur (17).

2. Système d'entreposage en blocs selon la revendication 1, **caractérisé en ce que** le dispositif de détermination du centre de gravité de charge de conteneur (17) détermine une excentricité de charge.

3. Système d'entreposage en blocs selon la revendication 1 ou 2, **caractérisé en ce que** le dispositif de détermination du centre de gravité de charge de conteneur (17) détermine une masse du conteneur (3).

4. Système d'entreposage en blocs selon l'une quelconque des revendication 1 à 3, **caractérisé en ce que** le dispositif de détermination du centre de gravité de charge de conteneur (17) comporte au moins trois systèmes de pesée (18) disposés à distance l'un de l'autre.

5. Système d'entreposage en blocs selon la revendication 4, **caractérisé en ce que** le dispositif de détermination du centre de gravité de charge de conteneur (17) comporte quatre systèmes de pesée (18), qui sont attribués aux coins du conteneur (3).

6. Système d'entreposage en blocs selon l'une quelconque des revendications 1 à 5, **caractérisé en ce que** le dispositif de détermination du centre de gravité de charge de conteneur (17) est disposé dans une station de travail ou de transfert (8) ou sur le véhicule de chargement (6).

7. Système d'entreposage en blocs selon l'une quelconque des revendications 1 à 6, **caractérisé en ce que** le dispositif de détermination du centre de gravité de charge de conteneur (17) comporte un système d'enregistrement optique (20).

8. Procédé permettant de faire fonctionner un système d'entreposage en blocs (1) avec plusieurs espaces de logement pour conteneur (2) et au moins un véhicule de chargement (6), qui est déplacé dans une direction de chargement vers les espaces de logement pour conteneur (2) et avec lequel on transporte au moins un conteneur (3) dans un espace de logement pour conteneur (2), sachant que les espaces de logement pour conteneur (2) sont constitués pour recevoir des piles de conteneurs, sachant que l'on détermine avant l'entreposage du conteneur (3) dans un espace de logement pour conteneur (2), un centre de gravité de charge de conteneur du conteneur (3), **caractérisé en ce que** l'on sélectionne un espace de logement pour conteneur (2) en fonction du centre de gravité de charge de conteneur déterminé.

9. Procédé selon la revendication 8, **caractérisé en ce que** l'on détermine le centre de gravité de la charge de conteneur avant chaque entreposage du conteneur (3) dans un espace de logement pour conteneur (2).

10. Procédé selon la revendication 8 ou 9, **caractérisé en ce que** l'on détermine le centre de gravité de charge de conteneur en déterminant un poids à plusieurs positions différentes du conteneur (3).

11. Procédé selon la revendication 10, **caractérisé en ce que** l'on détermine une masse totale du conteneur (3).

12. Procédé selon l'une quelconque des revendications 8 à 11, **caractérisé en ce que** l'on détermine de façon optique le centre de gravité de la charge de conteneur.

13. Procédé selon l'une quelconque des revendications 8 à 12, **caractérisé en ce que** l'on détermine une excentricité du centre de gravité de la charge de conteneur et sélectionne un espace de logement pour conteneur (2) en fonction de l'excentricité déterminée.
